# EUROPÄISCHE PATENTSCHRIFT

(11) **EP 0 682 904 B1**
(45) Veröffentlichungstag und Bekanntmachung des Hinweises auf die Patenterteilung: **23.10.1996**
(21) Anmeldenummer: 94115501.2
(22) Anmeldetag: 30.09.1994
(51) Int. Cl.: A47J 43/07, A47J 43/08

(54) **Stabmixer**
Mixing rod
Pied mixeur

(43) Veröffentlichungstag der Anmeldung: 22.11.1995
(73) Patentinhaber: SPEMOT AG, CH-4657 Dulliken (CH)
(72) Erfinder: Schmidiger, Peter, CH-4654 Lostorf (CH); Menzi, Beat Christian, CH-4653 Obergösgen (CH)
(74) Vertreter: AMMANN PATENTANWAELTE AG BERN

(56) Entgegenhaltungen:
- EP-A- 0 324 115
- DE-B- 1 224 006
- FR-A- 1 229 022
- FR-A- 1 250 939
- LU-A- 38 194

## Beschreibung

Die Erfindung betrifft einen Stabmixer gemäss dem Oberbegriff des Patentanspruchs 1.

Ein solcher Stabmixer ist aus Dokument LU-A-38194 bekannt und wird zum schnellen Zerkleinern und Vermischen von festen oder flüssigen Substanzen benützt. Dabei ist eine zuverlässige Dichtung des Mixstabgehäuses erwünscht, welche ein Eindringen von Mixgut verhindert. Derartige Verschmutzungen sind nämlich schwer zu beseitigen und nicht nur aus hygienischen Gründen unakzeptabel, sondern auch wegen der Beeinträchtigung der Wellenlagerung.

Bekannte Stabmixer weisen Dichtungen auf, bei denen grosse, radiale Kräfte auf die Welle ausgeübt werden, was entsprechend grosse Reibungsverluste mit sich bringt. Dies bedeutet einen hohen Energieverbrauch und eine Eigenerwarmung, was unerwünscht ist. Insbesondere bei Akku-betriebenen Stabmixern ist es wichtig, die Verlustleistung möglichst gering zu halten.

Der Erfindung liegt die Aufgabe zugrunde, einen gattungsgemässen Stabmixer zu schaffen mit einer zuverlässigen Dichtung des Mixstabgehäuses, bei der nur geringe Reibungsverluste auftreten.

Die genannte Aufgabe wird erfindungsgemäss dadurch gelöst, dass die Welle mit einer Abdichtfläche zum Anstossen in axialer Richtung an eine Anstossfläche eines am Mixstabgehäuse angeordneten Dichtrings versehen ist und an ihrer Aussenseite einen ersten Magneten aufweist, wobei an der Innenseite des Mixstabgehäuses in axialer Richtung gegenüber dem ersten Magneten ein zweiter Magnet derart angeordnet ist, dass die Magnete eine axiale, in Richtung des Motorenteils auf die Welle wirkende Kraft erzeugen. Somit erfolgt die Abdichtung durch einen axialen Kontakt zwischen der rotierenden Abdichtfläche der Welle und dem Dichtring, wobei der benötigte Dichtdruck mittels Magnete erzeugt wird. Der axiale Reibungskontakt der Dichtung ergibt eine relativ geringe Reibung. Beim Erzeugen des Anpressdruckes der Dichtung durch die Magnete tritt keine zusätzliche mechanische Reibung auf. Zudem beeinträchtigt die Abnutzung des Dichtrings in axialer Richtung die Dichtungswirkung nicht, da sie selbstnachstellend ist. Durch das Einschleifen der dichtenden Teile wird die Dichtungswirkung sogar verbessert. Weiterhin ist die Dichtfläche selbstreinigend.

Gemäss einer Ausführungsform der Erfindung weist das Mixelement mindestens ein propellerblattförmiges Mixblatt auf, wobei die Drehrichtung der Welle im Gebrauch derart ist, dass das Mixblatt ein Ansaugen des Mixgutes in axialer Richtung in die Mixglocke bewirkt. Dies verbessert und beschleunigt den Mixvorgang.

Gemäss einer weiteren Ausführungsform der Erfindung ist das Mixelement durch eine im wesentlichen halbkugelförmige, mit axialen Schlitzen versehene Mixglocke umgeben. Diese spezielle Form der Mixglocke bewirkt, zusammen mit dem propellerblattförmigen Mixblatt des Mixelementes, beim Mixen eines Mixgutes einen seitlichen Austritt desselben durch die Schlitze, so dass in der Mixglocke ein Unterdruck entsteht, welcher das Ansaugen von Mixgut in axialer Richtung in die Mixglocke hinein begünstigt und verstärkt, und ausserdem die Reibungsverluste zusätzlich reduziert.

Wenn der Unterdruck in der Mixglocke während des Mixvorgangs den von den Magneten erzeugten Dichtdruck überwindet, wird die Dichtung leicht geöffnet. Dabei tritt ein Luftstrom von Aussenluft durch den Mixstab in die Mixglocke auf, welcher ein Aufschäumen des Mixgutes verursacht, was für bestimmte kulinarische Anwendungen wünschenswert ist. Weiterhin gewährleistet der Aussenluftstrom, dass kein Mixgut in das Mixstabgehäuse gelangen kann. Ausserdem werden die Reibungsverluste beim leichten Öffnen der Dichtung zusätzlich reduziert.

Gemäss einer weiteren Ausführungsform der Erfindung ist die von den Magneten erzeugte Kraft einstellbar. Auf diese Weise kann das Auftreten der leichten Öffnung der Dichtung je nach Bedarf geregelt werden.

Vorteilhafte Weiterbildungen der Erfindung ergeben sich aus den weiteren Unteransprüchen.

Ein Ausführungsbeispiel der Erfindung ist nachstehend anhand der Zeichnungen näher erläutert. Es zeigen
- Fig. 1: eine Seitenansicht eines erfindungsgemässen Stabmixers,
- Fig. 2: einen schematischen Schnitt des Mixstabes in Längsrichtung (bei geschlossener Dichtung),
- Fig. 3: einen weiteren schematischen Schnitt des Mixstabes in Längsrichtung (bei leicht geöffneter Dichtung),
- Fig. 4: eine Seitenansicht der Mixglocke,
- Fig. 5: eine Unteransicht der Mixglocke der Figur 4,
- Fig. 6: eine Draufsicht des Mixelements und
- Fig. 7: eine Seitenansicht des Mixelements der Figur 6.

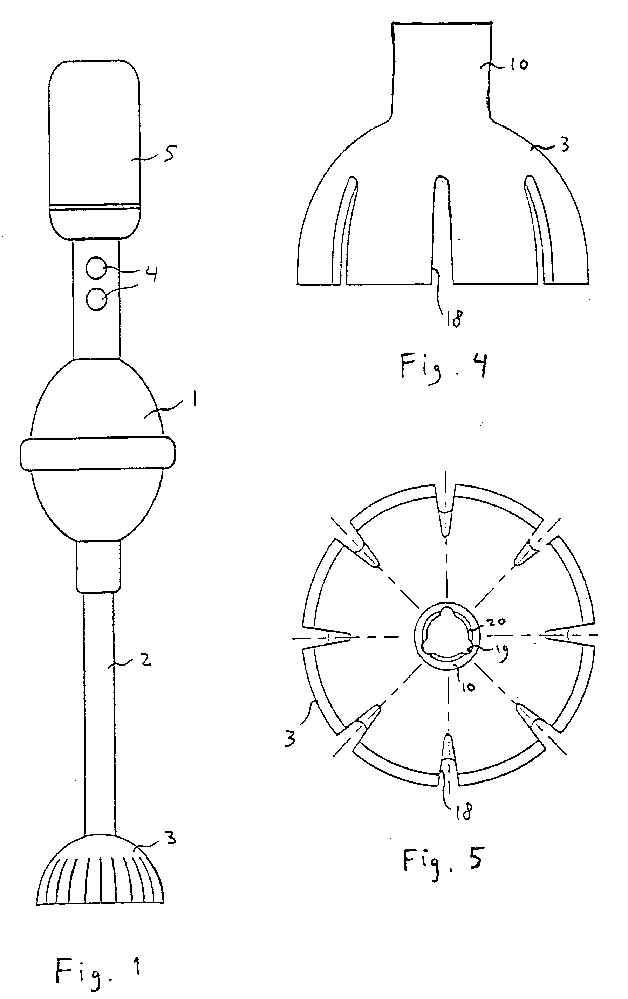

Die Figur 1 zeigt eine Seitenansicht eines erfindungsgemässen Stabmixers. Ein Motorenteil 1 ist mit einem Mixstab 2 verbunden, welcher an einem Ende eine Mixglocke 3 aufweist. Diese umgibt ein nicht gezeigtes, drehbares Mixelement und dient somit als Schutzhülle beim Mixvorgang. Zwei Schalter 4 sind zum Einschalten eines sich im Motorenteil 1 befindenden Motors bei gleichzeitiger Betätigung vorgesehen. Dieser treibt eine Welle im Mixstab 2 an, welche mit dem Mixelement verbunden ist. Durch die Verwendung zweier Schalter 4 wird ein zufälliges, unbeabsichtigtes Einschalten des Motors bei Betätigung eines einzelnen der beiden Schalter vermieden. Ein aufladbarer Akku 5 ist am Stabmixer befestigbar zur Stromversorgung desselben. Das Vorhandensein eines Akkus 5 ist nicht erfindungswesentlich, da die Erfindung bei jeglicher Form der Stromversorgung anwendbar ist.

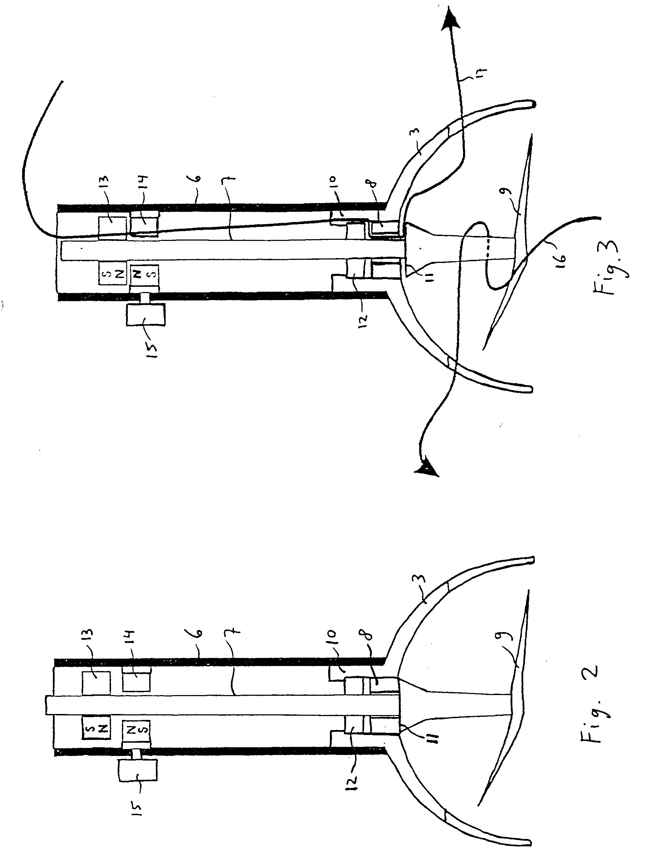

In der Figur 2 ist ein schematischer Schnitt des Mixstabes 2 in Längsrichtung wiedergegeben. Dieser weist, abgesehen von der Mixglocke 3, ein rohrförmiges Mixstabgehäuse 6 und eine darin gelagerte, vom Motor im Motorenteil 1 antreibbare Welle 7 auf. Diese Welle 7 ist durch eine mit einem Dichtring 8 versehene Öffnung am unteren Ende des Mixstabgehäuses 6 geführt und weist am freien Ende ein Mixelement 9 auf, welches mittels der angetriebenen Welle 7 schnell rotiert werden kann zum Zerkleinern und Vermischen des Mixgutes. Die Mixglocke 3 ist mit einer zentralen Öffnung für die Welle 7 versehen und beispielsweise mittels eines Mixglockenhalses 10 am unteren Ende des Mixstabgehäuses 6 befestigt. Die Welle 7 ist mit einer Abdichtfläche 11 zum Anstossen in axialer Richtung an eine Anstossfläche des am Mixstabgehäuse 6 angeordneten Dichtrings 8 versehen. Dabei bilden der Dichtring 8 und die mit der Welle 7 mitdrehende Abdichtfläche 11 die axiale Dichtung des Mixstabgehäuses 6. Der Dichtring 8 ist am unteren Ende des Mixstabgehäuses 6 in der Öffnung der Mixglocke 3 mit Spiel um die Welle 7 angeordnet, so dass die Welle 7 keinen radialen Kräften ausgesetzt ist. Innerhalb des Mixstabgehäuses 6 ist in einem geringen Abstand zum Dichtring 8 auf der Innenseite des Mixglockenhalses 10 der Mixglocke 3 ein Lager 12 zur Lagerung der Welle 7 vorgesehen. Die Lagerung der Welle 7 ist derart, dass die Welle 7 in axialer Richtung leicht verschiebbar ist. Je nach Länge des Mixstabgehäuses 6 kann nötigenfalls in der Mitte ein weiteres Lager (oder können gegebenenfalls mehrere Lager) zur Vermeidung von unerwünschten Resonanzen angeordnet werden.

Weiter in Richtung des Motorenteils 1 ist in einem Abstand zur Abdichtfläche 11 ein erster ringförmiger Magnet 13 an der Aussenseite der Welle 7 befestigt. Der erste Magnet 13 hat in axialer Richtung eine erste Polarität, beispielsweise mit dem Nordpol auf der Seite des Mixelements 9 und dem Südpol auf der Seite des Motorenteils 1. An der Innenseite des Mixstabgehäuses 6 ist in geringem Abstand zum ersten Magneten 13 auf der Seite des Mixelementes 9 und in axialer Richtung gegenüber dem ersten Magneten 13 ein zweiter ringförmiger Magnet 14 befestigt. Dieser hat in axialer Richtung eine zweite Polarität, die der umgekehrten Polarität des ersten Magneten 13 entspricht. Im obenerwähnten Beispiel ist beim zweiten Magneten 14 der Nordpol auf der Seite des Motorenteils 1 und der Südpol auf der Seite des Mixelements 9. Somit ist der Magnet 14 derart angeordnet, dass dieser den ersten Magneten 13 zur Erzeugung einer axialen, in Richtung des Motorenteils 1 auf die Welle 7 wirkenden Kraft abstösst.

Natürlich können statt der ringförmigen Magnete 13, 14 auch jeweils mehrere, in einem Kreis angeordnete Magnete verwendet werden.

Gemäss einer weiteren, nicht gezeigten Ausführungsform der Erfindung ist der Dichtring 8 gleichzeitig als zweiter Magnet ausgebildet, wobei der erste Magnet zwischen dem Dichtring 8 und dem Lager 12 angeordnet ist.

Gemäss noch einer weiteren, nicht gezeigten Ausführungsform der Erfindung sind die Magnete 13, 14 derart angeordnet, dass sie sich zur Erzeugung der axial gerichteten Dichtungskraft anziehen. Dazu ist der zweite Magnet 14 in geringem Abstand zum ersten Magneten 13 auf der Seite des Motorenteils 1 und in axialer Richtung gegenüber dem ersten Magneten 13 befestigt, wobei die Polaritäten der Magnete in axialer Richtung gleich sind, so dass sie sich anziehen. Hierbei ist auf der Innenseite des Mixstabgehäuses 6 ein Anschlag vorgesehen, der die axiale Verschiebung der Welle 7 vom Motorenteil 1 weg begrenzt. Bei dieser Ausführungsform kann der erste Magnet 13 oder der zweite Magnet 14 durch ein ferromagnetisches Element ersetzt werden.

Die gezeigte Ausführungsform mit den sich abstossenden Magneten 13, 14 hat den Vorteil, dass der zweite, feste Magnet 14 gleichzeitig als Anschlag für den ersten, rotierenden Magneten 13 dient.

Der zur axialen Dichtung benötigte Dichtdruck wird mittels der Magnete 13 und 14 erzeugt. Die Dichtung geschieht durch den axialen Kontakt zwischen der rotierenden Abdichtfläche 11 der Welle 7 und dem Dichtring 8, wobei eine relativ geringe Reibung auftritt. Beim Erzeugen des Anpressdruckes der Dichtung durch die Magnete 13 und 14 tritt keine zusätzliche mechanische Reibung auf. Die allfällige Abnutzung des Dichtrings 8 in axialer Richtung beeinträchtigt die Dichtungswirkung nicht, da sie selbstnachstellend ist. Durch das Einschleifen im Gebrauch stellen sich der Dichtring 8 und die Abdichtfläche 11 genau aufeinander ein, so dass die Dichtungswirkung sogar noch verbessert wird. Auch ist die Dichtfläche selbstreinigend. Die geringen Reibungsverluste erzeugen keine unerwünschte Wärme und erlauben bei einem Stabmixer mit Akku-Betrieb eine Benützung über eine lange Zeit bis zum Wiederaufladen des Akkus 5.

Die Abdichtfläche 11 und die Anstossfläche des Dichtrings 8 sind gemäss einer Ausführungsform kreisringförmig und senkrecht zur Wellenachse gebildet, wobei der Aussendiameter der Abdichtfläche 11 nicht grösser ist als derjenige des Dichtrings 8. So ist die beim axialen Dichtungskontakt auftretende Reibung zwischen dem Dichtring 8 und der Abdichtfläche 11 minimal.

Gemäss einer weiteren, nicht gezeigten Ausführungsform sind die Abdichtfläche 11 und die Anstossfläche des Dichtrings 8 konisch gebildet. Auf diese Weise ist das Lager 12 nicht mehr erforderlich, weil die Dichtung gleichzeitig als Lagerung für die Welle 7 dienen kann.

Die von den Magneten 13 und 14 erzeugte Dichtungskraft ist einstellbar, beispielsweise mittels eines Schiebers 15, womit der Abstand in axialer Richtung zwischen den beiden Magneten einstellbar ist, falls mindestens einer der beiden als Permanentmagnet ausgebildet ist. Natürlich sind auch andere Vorrichtungen zum Einstellen möglich, wie zum Beispiel Schraubmechanismen oder dergleichen. In einer weiteren Ausführungsform sind/ist der erste Magnet 13 und/oder der zweite Magnet 14 als Elektromagnet mit einstellbarer Feldstärke ausgebildet. Die Einstellbarkeit des Dichtdrucks hat den Vorteil, dass eine etwaige Abnutzung des Dichtrings 8 oder der Abdichtfläche 11 kompensiert werden kann. Weitere Vorteile werden nachstehend beschrieben.

Das Mixelement 9 weist mindestens ein propellerblattförmiges Mixblatt 24 auf (siehe auch die Figuren 6 und 7), so dass im Gebrauch bei geeigneter Drehrichtung der Welle 7 ein Ansaugen des Mixgutes in axialer Richtung in die Mixglocke 3 auftritt.

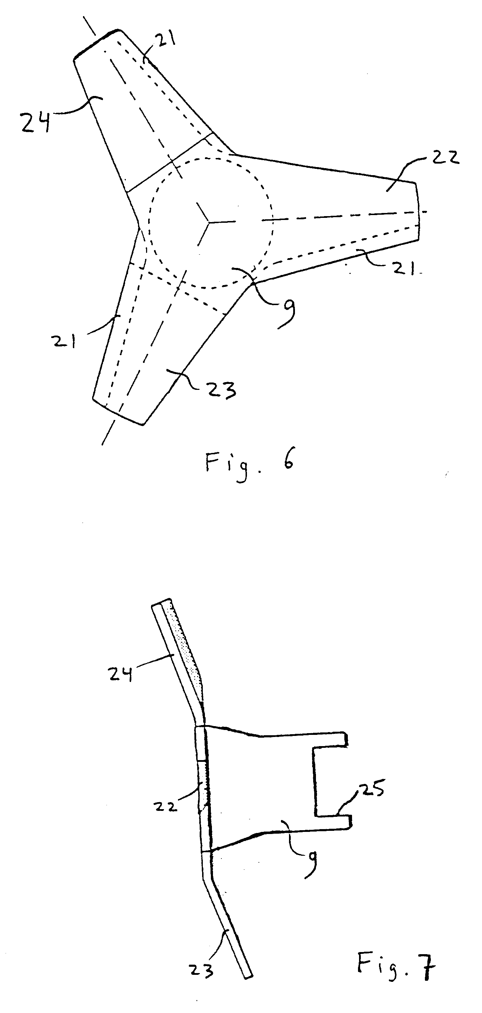

Die Mixglocke 3, welche das Mixelement 9 umgibt, ist im wesentlichen halbkugelförmig ausgebildet und mit axialen Schlitzen 18 versehen (siehe auch die Figuren 4 und 5). Diese Form der Mixglocke 3 ermöglicht, zusammen mit dem propellerblattförmigen Mixblatt 24 des Mixelementes 9, beim Mixen einen seitlichen Austritt des Mixgutes durch die Schlitze 18, so dass in der Mixglocke 3 in der Umgebung der Dichtung ein Unterdruck entsteht, welcher das Ansaugen von Mixgut in axialer Richtung in die Mixglocke 3 hinein verstärkt. So wird der Mixvorgang verbessert und beschleunigt. Dies ist in der Figur 3 mit dem Pfeil 16 schematisch wiedergegeben.

Wenn der Unterdruck in der Mixglocke 3 während des Mixvorgangs so gross wird, dass er den von den Magneten 13, 14 erzeugten Dichtdruck überwindet, wird die Dichtung leicht geöffnet. Die Abdichtfläche 11 der drehenden Welle 7 stösst nicht länger an den Dichtring 8 an. Dies ermöglicht einen Luftstrom von Aussenluft durch das Mixstabgehäuse 6, an den Magneten 13, 14 und am Lager 12 vorbei, durch den Dichtring 8 in die Mixglocke 3 und weiter mit dem Mixgut durch die Schlitze 18, welcher in Fig. 3 mit dem Pfeil 17 schematisch illustriert ist. Das Lager 12 ist dazu derart im Mixglockenhals 10 angeordnet, dass die Luft ungehindert vorbeigehen kann, wie anhand der Figur 5 illustriert ist.

Der Luftstrom gewährleistet, dass auch bei leicht geöffneter Dichtung kein Mixgut in das Mixstabgehäuse 6 gelangen kann. Zudem hat der Luftstrom eine reinigende Wirkung auf die Dichtung. Weiterhin verursacht die in die Mixglocke 3 eintretende Aussenluft ein Aufschäumen des Mixgutes, was für bestimmte kulinarische Anwendungen wünschenswert ist. Bei leicht geöffneter Dichtung reduzieren sich ausserdem die Reibungsverluste weiter. Durch die Einstellbarkeit der von den Magneten 13, 14 erzeugten Kraft kann das Auftreten der leichten Öffnung der Dichtung je nach Bedarf geregelt werden. Zum Aufschäumen eines Mixgutes kann der Abstand zwischen den Magneten 13, 14 mittels des Schiebers 15 vergrössert werden, so dass die Dichtung sich leichter öffnet.

Die Figur 4 zeigt eine Seitenansicht der Mixglocke 3. Diese ist halbkugelförmig ausgebildet und mit axialen Schlitzen 18 versehen. Der Mixglockenhals 10 umgibt die zentrale Öffnung für die Welle 7 und dient zur Befestigung der Mixglocke 3 am Mixstabgehäuse 6.

In der Figur 5 ist eine Unteransicht der Mixglocke der Figur 4 wiedergegeben. Der Mixglockenhals 10 weist auf seiner Innenseite drei sich über ihre ganze Länge erstreckende Nuten 19 auf, die den oben beschriebenen Luftstrom am Lager 12 vorbei ermöglichen. Das nicht gezeigte, zylinderförmige Lager 12 hat einen Aussendiameter, der dem Innendiameter des Mixglockenhalses 10 entspricht. Der Mixglockenhals 10 weist auf seiner Innenseite weiterhin drei kreisringsektorförmige Anschläge 20 für das Lager 12 auf.

Die Figur 6 zeigt eine Draufsicht des Mixelements 9, welches als mehrblättiges Messer ausgebildet ist. Bei den beispielsweise drei Mixblättern 22, 23, 24 ist jeweils ein Seitenrand mit einem Klingenschliff 21 versehen. So kann das Mixgut beim Mixvorgang einfach zerkleinert werden. Das Mixelement 9 weist vorzugsweise mindestens ein propellerblattförmiges Mixblatt 24 auf, wobei die Drehrichtung der Welle 7 im Gebrauch derart ist, dass das Mixblatt 24 ein Ansaugen von Mixgut in axialer Richtung in die Mixglocke 3 bewirkt.

In der Figur 7 ist eine Seitenansicht des Mixelements der Figur 6 wiedergegeben. Vorzugsweise ist mindestens ein Mixblatt 23 des Mixelementes 9 mindestens teilweise in Richtung der Wellenachse gebogen. Dies verbessert den Mixvorgang. Mindestens ein Mixblatt 24 des Mixelementes 9 ist mindestens teilweise um seine eigene Achse verdreht. Somit ist auf einfache Weise ein propellerförmiges Mixblatt 24 verwirklicht, das eine gute Ansaugwirkung gewährleistet. Auch ergibt dies beim Mixen einen grösseren Durchsatz des Mixgutes und führt zu einer besseren Zerkleinerung von grossen Stücken. Ein erstes Mixblatt 22 ist senkrecht zur Wellenachse und gerade ausgebildet, ein zweites Mixblatt 23 ist um beispielsweise 15° in Richtung der Wellenachse und auf die Dichtung zu gebogen, und ein drittes Mixblatt 24 ist um beispielsweise 15° in Richtung der Wellenachse und von der Dichtung weg gebogen sowie um beispielsweise 6° um seine eigene Achse verdreht. Das Mixelement 9 ist mittels einer Kupplung 25 an der Welle 7 befestigbar.

## Patentansprüche

1. Stabmixer mit einem Motorenteil (1) und einem Mixstab (2), welcher ein Mixstabgehäuse (6) und eine darin gelagerte, von einem Motor im Motorenteil (1) antreibbare Welle (7) umfasst, die durch eine mit einer Dichtung versehene Öffnung des Mixstabgehäuses (6) geführt ist und am freien Ende ein Mixelement (9) aufweist, **dadurch gekennzeichnet**, **dass** die Welle (7) mit einer Abdichtfläche (11) zum Anstossen in axialer Richtung an eine Anstossfläche eines am Mixstabgehäuse (6) angeordneten Dichtrings (8) versehen ist und an ihrer Aussenseite einen ersten Magneten (13) aufweist, wobei an der Innenseite des Mixstabgehäuses (6) in axialer Richtung gegenüber dem ersten Magneten (13) ein zweiter Magnet (14) derart angeordnet ist, dass die Magnete (13, 14) eine axiale, in Richtung des Motorenteils (1) auf die Welle (7) wirkende Kraft erzeugen.

2. Stabmixer nach Anspruch 1, **dadurch gekennzeichnet, dass** die Abdichtfläche (11) und die Anstossfläche des Dichtrings (8) kreisringförmig und senkrecht zur Wellenachse gebildet sind.

3. Stabmixer nach Anspruch 1, **dadurch gekennzeichnet, dass** die Abdichtfläche (11) und die Anstossfläche des Dichtrings (8) konisch gebildet sind.

4. Stabmixer nach einem der Ansprüche 1 bis 3, **dadurch gekennzeichnet, dass** das Mixelement (9) mindestens ein propellerblattförmiges Mixblatt (24) aufweist, wobei die Drehrichtung der Welle (7) im Gebrauch derart ist, dass das Mixblatt (24) ein Ansaugen von Mixgut in axialer Richtung in die Mixglocke (3) bewirkt.

5. Stabmixer nach einem der Ansprüche 1 bis 4, **dadurch gekennzeichnet, dass** das Mixelement (9) durch eine im wesentlichen halbkugelförmige, mit axialen Schlitzen (18) versehene Mixglocke (3) umgeben ist.

6. Stabmixer nach einem der Ansprüche 1 bis 5, **dadurch gekennzeichnet, dass** bei mindestens einem Mixblatt (22, 23, 24) des Mixelementes (9) ein Seitenrand mit einem Klingenschliff (21) versehen ist.

7. Stabmixer nach einem der Ansprüche 1 bis 6, **dadurch gekennzeichnet, dass** mindestens ein Mixblatt (23) des Mixelementes (9) mindestens teilweise in Richtung der Wellenachse gebogen ist.

8. Stabmixer nach einem der Ansprüche 1 bis 7, **dadurch gekennzeichnet, dass** mindestens ein Mixblatt (24) des Mixelementes (9) mindestens teilweise um seine eigene Achse verdreht ist.

9. Stabmixer nach einem der Ansprüche 1 bis 8, **dadurch gekennzeichnet, dass** die von den Magneten (13, 14) erzeugte Kraft einstellbar ist.

10. Stabmixer nach Anspruch 9, **dadurch gekennzeichnet, dass** der erste und/oder der zweite Magnet (13, 14) als Permanentmagnet ausgebildet sind/ist und der Abstand zwischen den beiden Magneten (13, 14) einstellbar ist.

11. Stabmixer nach Anspruch 9 oder 10, **dadurch gekennzeichnet, dass** der erste und/oder der zweite Magnet (13, 14) als Elektromagnet mit einstellbarer Feldstärke ausgebildet sind/ist.

12. Stabmixer nach einem der Ansprüche 1 bis 11, **dadurch gekennzeichnet, dass** der erste Magnet (13) oder der zweite Magnet (14) durch ein ferromagnetisches Element ersetzt ist.

13. Stabmixer nach einem der Ansprüche 1 bis 12, **dadurch gekennzeichnet, dass** dieser mit einem aufladbaren Akku (5) zur Stromversorgung versehen ist.

## Claims

1. Hand mixer, consisting of a motor portion (1) and a mixing rod (2) comprising a mixing rod housing (6) and a shaft (7) which is journalled therein and capable of being driven by a motor in said motor portion (1), said shaft passing through an opening of said mixing rod housing (6) which is provided with a seal, and being provided at its end with a mixing element (9), characterised in that said shaft (7) is provided with a sealing surface (11) for axially abutting against a bearing surface of a sealing ring (8) which is disposed on said mixing rod housing (6), and in that it is provided on its outside with a first magnet (13), a second magnet (14) being arranged on the inside of said mixing rod housing (6) axially opposite said first magnet (13) in such a manner that said magnets (13, 14) produce an axial force acting upon said shaft in the direction of sais motor portion (1).

2. Hand mixer according to claim 1, characterised in that said sealing surface (11) and the bearing surface of said sealing ring (8) have an annulus shape and are arranged perpendicular to the axis of said shaft.

3. Hand mixer according to claim 1, characterised in that said sealing surface (11) and the bearing surface of said sealing ring (8) have a conical shape.

4. Hand mixer according to any one of claims 1 to 3, characterised in that said mixing element (9) comprises at least one propeller blade-shaped mixing blade (24), the direction of rotation of said shaft (7) in use being such that said mixing blade (24) produces an axial intake of the mixed substance into the mixing bell (3).

5. Hand mixer according to any one of claims 1 to 4, characterised in that said mixing element (9) is surrounded by an essentially hemispherical mixing bell (3) which is provided with axial slots (18).

6. Hand mixer according to any one of claims 1 to 5, characterised in that at least one of said mixing blades (22, 23, 24) of said mixing element (9) is provided with a sharpened lateral edge (21).

7. Hand mixer according to any one of claims 1 to 6, characterised in that at least one mixing blade (23) of said mixing element (9) is at least partially bent in the direction of the axis of said shaft.

8. Hand mixer according to any one of claims 1 to 7, characterised in that at least one mixing blade (24) of said mixing element (9) is at least partially twisted about its own axis.

9. Hand mixer according to any one of claims 1 to 8, characterised in that the force produced by said magnets (13, 14) is adjustable.

10. Hand mixer according to claim 9, characterised in that the first and/or the second one of said magnets (13, 14) are/is (a) permanent magnet(s), and the distance between the two magnets (13, 14) is adjustable.

11. Hand mixer according to claim 9 or 10, characterised in that the first and/or the second one of said magnets (13, 14) are/is (an) electromagnet(s) whose field intensity is adjustable.

12. Hand mixer according to any one of claims 1 to 11, characterised in that said first magnet (13) or said second magnet (14) is replaced with a ferromagnetic element.

13. Hand mixer according to any one of claims 1 to 12, characterised in that it is provided with a rechargeable battery for its power supply.

## Revendications

1. Batteur électrique, composé d'une partie moteur (1) et d'une tige de mélange (2) comprenant un boîtier (6) de la tige et un arbre (7) logé dans ce dernier et capable d'être entraîné par un moteur dans ladite partie moteur (1), ledit arbre passant par une ouverture dudit boîtier (6) de la tige qui présente un joint d'étanchéité, et présentant à son extrémité libre un élément mélangeur (9), caractérisé en ce que ledit arbre (7) présente une surface d'étanchéité (11) venant buter en direction axiale contre une surface de butée d'une bague d'étanchéité (8) disposée dans ledit boîtier (6) de la tige, et que ledit arbre (7) présente à l'extérieur un premier aimant (13), un deuxième aimant (14) étant disposé à l'intérieur dudit boîtier (6) de la tige axialement en face dudit premier aimant (13) de telle manière que lesdits aimants (13, 14) produisent une force axiale agissant sur ledit arbre (7) en direction de ladite partie moteur (1).

2. Batteur électrique selon la revendication 1, caractérisé en ce que ladite surface d'étanchéité (11) et la surface de butée de ladite bague d'étanchéité (8) ont la forme d un anneau de cercle et sont perpendiculaires à l'axe dudit arbre.

3. Batteur électrique selon la revendication 1, caractérisé en ce que la surface d'étanchéité (11) ainsi que la surface de butée de la bague d'étanchéité (8) sont de forme conique.

4. Batteur électrique selon l'une quelconque des revendications 1 à 3, caractérisé en ce que ledit élément mélangeur (9) présente au moins une lame de mélange (24) en forme de pale d'hélice, la direction de rotation dudit arbre (7) pendant l'utilisation étant telle que ladite lame de mélange (24) produit une aspiration en direction axiale de la substance mélangée dans la cloche de mélange (3).

5. Batteur électrique selon l'une quelconque des revendications 1 à 4, caractérisé en ce que ledit élément mélangeur (9) est entouré d'une cloche de mélange (3) essentiellement hémisphérique présentant des fentes axiales (18).

6. Batteur électrique selon l'une quelconque des revendications 1 à 5, caractérisé en ce qu'au moins une des lames de mélange (22, 23, 24) dudit élément de mélange (9) présente une arête latérale affûtée.

7. Batteur électrique selon l'une quelconque des revendications 1 à 6, caractérisé en ce qu'au moins une lame de mélange (23) dudit élément de mélange (9) est au moins partiellement recourbée en direction de l'axe dudit arbre.

8. Batteur électrique selon l'une quelconque des revendications 1 à 7, caractérisé en ce qu'au moins une lame de mélange (24) dudit élément de mélange (9) est au moins partiellement tordue autour de son propre axe.

9. Batteur électrique selon l'une quelconque des revendications 1 à 8, caractérisé en ce que la force produite par lesdits aimants (13, 14) est réglable.

10. Batteur électrique selon la revendication 9, caractérisé en ce que le premier et/ou le deuxième desdits aimants (13, 14) sont/est des aimants permanents, et que la distance entre les deux aimants (13, 14) est réglable.

11. Batteur électrique selon la revendication 9 ou 10, caractérisé en ce que le permier et/ou le deuxième desdits aimants (13, 14) sont/est des électroaimants dont l'intensité du champ est réglable.

12. Batteur électrique selon l'une quelconque des revendications 1 à 11, caractérisé en ce que ledit premier aimant (13) ou ledit deuxième aimant (14) est remplacé par un élément ferromagnétique.

13. Batteur électrique selon l'une quelconque des revendications 1 à 12, caractérisé en ce qu'il est équipé d'un accumulateur (5) rechargeable pour l'alimentation.
